**Europäisches Patentamt**

**European Patent Office**

**Office européen des brevets**

(11) Veröffentlichungsnummer: **0 465 902 A2**

# EUROPÄISCHE PATENTANMELDUNG

(21) Anmeldenummer: **91110339.8**

(51) Int. Cl.⁵: **H04N 5/64**

(22) Anmeldetag: **22.06.91**

(30) Priorität: **13.07.90 DE 4022370**

(43) Veröffentlichungstag der Anmeldung:
**15.01.92 Patentblatt 92/03**

(84) Benannte Vertragsstaaten:
**DE ES FR GB IT NL SE**

(71) Anmelder: **Nokia Unterhaltungselektronik
(Deutschland) GmbH
Östliche Karl-Friedrich-Strasse 132
W-7530 Pforzheim(DE)**

(72) Erfinder: **Gruber, Hermann
Fichtenstrasse 9
W-8447 Hunderdorf(DE)**
Erfinder: **Leipold, Kurt
Hauptstrasse 1
W-8441 Feldkirchen(DE)**
Erfinder: **Schultes, Hans
Harthauser Weg 9a
W-8440 Straubing(DE)**

(54) **Integrierte Fernsehlautsprecherbox.**

(57) Zur Verkleinerung der Gerätefrontfläche (11) eines Fernsehgerätes wird erfindungsgemäß vorgeschlagen, die zu einer guten Baßwiedergabe erforderlichen großen Baßlautsprecher (25) in einem an der Rückseite (21) der Gerätefrontfläche (11) angeordneten Lautsprechergehäuse (22) dergestalt anzuordnen, daß ein Teil des vom Baßlautsprecher erzeugten Schalldrucks über ein in das Lautsprechergehäuse (22) ragendes Baßreflexrohr (26) und der andere Teil des Schalldrucks über die Kühlöffnungen (16) im Gerätegehäuse (10) abgestrahlt wird und zum Diffusschallfeld beiträgt. Durch die geteilte Abgabe des Schalldrucks erfordern die Baßreflexrohre (26) in der Gerätefrontfläche (11) keine größeren Öffnungsquerschnitte als etwa Öffnungen für Hochmitteltonlautsprecher bzw. Hoch- und Mitteltonlautsprecher.

Fig.1

EP 0 465 902 A2

## Technisches Gebiet

Die Erfindung befaßt sich mit der Lautsprecheranordnung, insbesondere von Baßlautsprechern in Fernsehgeräten.

## Stand der Technik

Herkömmlicherweise sind Lautsprecher in Fernsehgeräten in der Gerätefrontfläche oder in den Geräteseitenflächen integriert. Bei der Integration der Lautsprecher in die Gerätefrontflächen erfordert dies Frontflächenquerschnitte, die im Vergleich zu Fernsehgeräten, deren Lautsprecher in den Geräteseitenflächen eingelassen sind, relativ großdimensioniert sind. Letzteres gilt insbesondere dann, wenn zur verbesserten Klangwiedergabe neben beispielsweise Hoch- und Mitteltonlautsprechern auch Baßlautspecher zur Anwendung kommen sollen. Dies beruht darauf, daß zu einer guten Baßwiedergabe die Baßlautsprecher im Vergleich zu den Hoch- und Mitteltonlautsprechern sowie auch zu Mittelhochtonlautsprechern wesentlich größere Querschnitte erfordern.

Der Erfindung liegt die Aufgabe zugrunde, eine Baßlautsprecheranordnung für Fernsehgeräte zu schaffen, die bei großdimensionierten Baßlautsprechern und damit dem gewährleisteten guten Klangverhalten keine größeren Öffnungsquerschnitte in der Gerätefrontfläche erfordern, als Hoch- und Mitteltonlautsprecher beziehungsweise Mittelhochtonlautsprecher.

## Darstellung der Erfindung

Diese Aufgabe wird dadurch gelöst, daß die Baßlautsprecher in eine zum Geräteinneren hinweisende Außenöffnung des Lautsprechergehäuses eingesetzt sind, so daß ein Teil des vom Baßlautsprecher erzeugten Schalldrucks durch ein Baßreflexrohr frontseitig und der andere Teil des Schalldrucks im Geräteinneren durch die Kühlöffnungen, die in der dem Bildschirm abgewandten Gehäusehälfte angeordnet sind, abgestrahlt wird und zum Diffusschallfeld beiträgt.

Vorteilhafte Aus- und Weiterbildungen der Erfindung sind in den beiden Unteransprüchen ausgeführt.

Werden nach Anspruch 2 die Öffungsquerschnitte der Baßreflexrohre kleiner/gleich den Öffnungsquerschnitten für die übrigen Lautsprecher ausgebildet, lassen sich sehr schmale Seitenbereiche bzw. Kopf- oder Bodenbereiche ausbilden, ohne daß deswegen die Klangqualität der Baßwiedergabe gemindert wird. Sind, wie in Anspruch 3 beansprucht, die Außenöffnungen in den Lautsprechergehäusen entweder der Bildröhre oder der Rückwand des Gerätegehäuses zugewandt, zeigen die in diese Außenöffnungen des Lautsprechergehäuses eingesetzten Baßlautsprecher ihr bestes Klangverhalten.

Wird nach Unteranspruch 4 das jeweilige Lautsprechergehäuse teilweise von der Geräteseitenfläche und der Rückseite der Gerätefrontfläche gebildet, hat dies neben dem Vorteil der Materialersparnis auch den Vorteil, daß nach Wegfall der zur Gehäuseseitenfläche hinweisenden Fläche der Raum zwischen Bildschirm und den Gehäuseseitenflächen besser ausgenutzt wird.

## Kurzbeschreibung der Figuren

Figur 1 zeigt ein Gehäuse eines Fernsehgeräts in perspektivischer Darstellung.

Figur 2 zeigt eine Schnittdarstellung durch ein Gehäuse eines Fernsehgeräts.

## Wege zum Ausführen der Erfindung

Die Erfindung wird nun anhand der beiden Figuren näher beschrieben. Gleiche Bauteile in den Figuren haben gleiche Bezugszeichen.

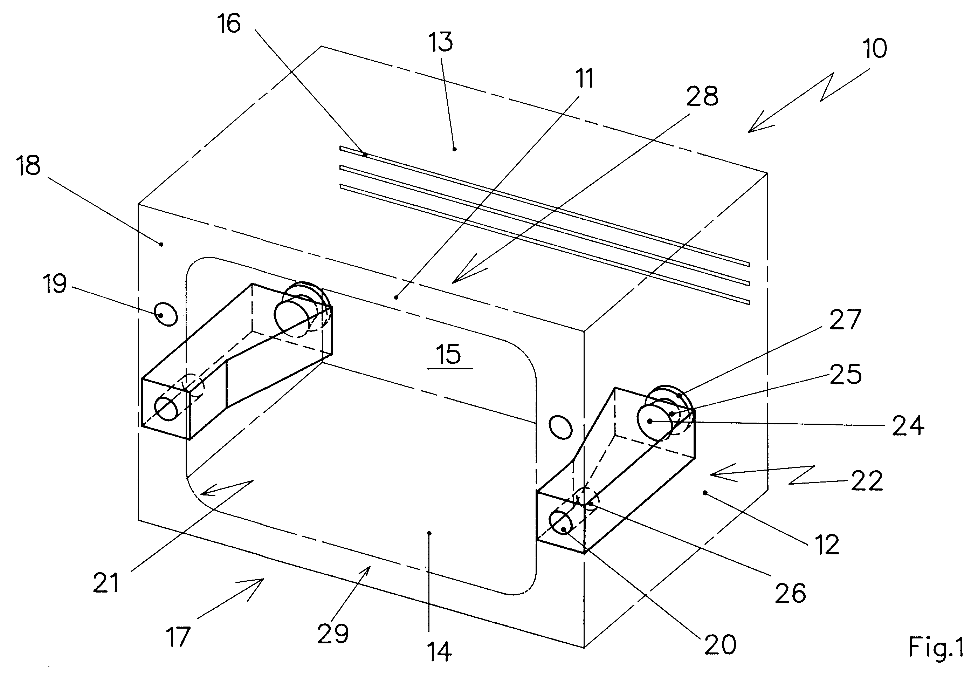

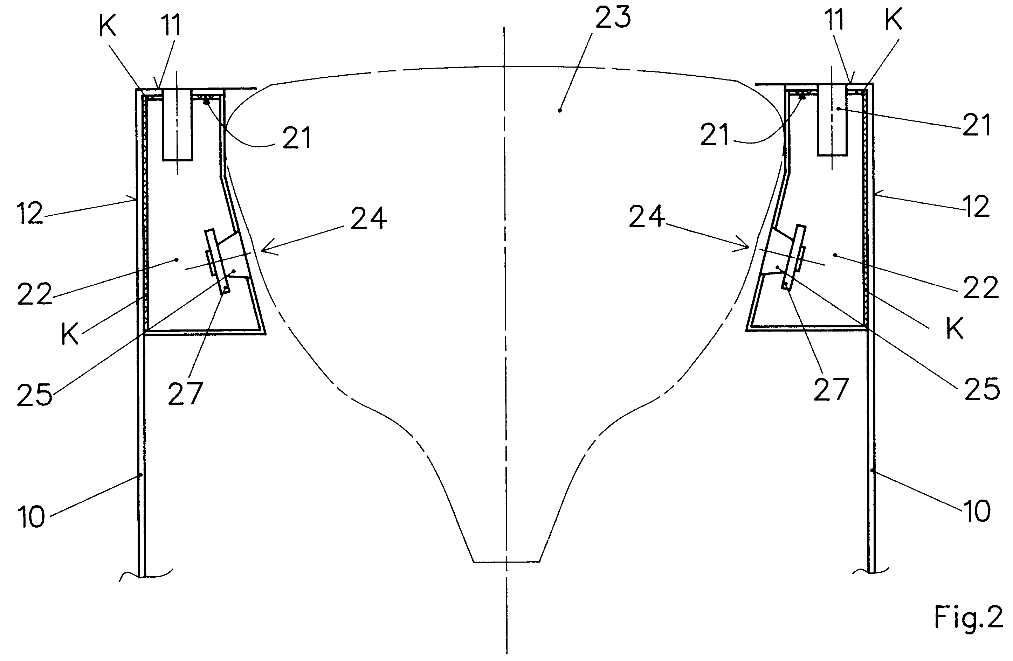

In Figur 1 ist ein Gerätegehäuse 10 eines Fernsehgerätes dargestellt. Dieses Gerätegehäuse 10 wird von der Gerätefrontfläche 11, den beiden Geräteseitenflächen 12, der Dachfläche 13 und dem Boden 14 sowie der Rückfront 15 gebildet. Die Rückfront 15 ist mit Kühlöffnungen 16 versehen. Es wird darauf hingewiesen, daß in einem anderen, nicht dargestellten Ausführungsbeispiel die Kühlöffnungen 16 auch in der Dachfläche 13 sowie in den Geräteseitenflächen 12 angeordnet sein können. Die Gerätefrontfläche 11 weist neben der Öffnung 17, in die die in dieser Figur nicht dargestellte Bildröhre 23 eingreift, in den beiden Seitenbereichen 18 der Gerätefrontfläche 11 jeweils zwei übereinanderliegende Öffnungen 19, 20 auf. Die Öffnungen 19 sind zur Aufnahme von Mittelhochtonlautsprechern vorgesehen. Bei Einsatz von Hoch- und Mitteltonlautsprechern sind die Öffnungen 19 pro Seitenbereich 18 zu verdoppeln. An der Rückseite 21 der Gerätefrontfläche 11 sind im Bereich der Öffnungen 20 die Lautsprechergehäuse 22 angesetzt, wobei die zur Gehäusefrontfläche 11 und den Geräteseitenflächen 12 unmittelbar hinweisenden Seiten der Lautsprechergehäuse 22 von der Gerätefrontfläche 11 und den jeweiligen Geräteseitenflächen 12 gebildet werden. Die einander zugewandten Flächen der beiden Lautsprechergehäuse 22 verlaufen im vorderen, der Gerätefrontfläche 11 nahen Bereich parallel zueinander und sodann konisch aufeinander zu. Diese Formgebung der Lautsprechergehäuse 22 wurde deshalb gewählt, um den bei eingesetzter - jedoch in dieser Figur nicht dargestellter - Bildröhre den zur jeweiligen Geräteseitenfläche 12 gebildeten Raum optimal zu nutzen. Im übrigen wird darauf hingewiesen, daß auch jede andere Formgebung der Lautsprechergehäuse 22 möglich ist, sofern sichergestellt ist, daß zumindest eine der Gehäuseflächen des Lautsprechergehäuses 22 so beschaffen ist, daß eine ausreichend große, zum Geräteinneren hinweisende Außenöffnung 24 aufnehmen kann, in die der Baßlautsprecher eingesetzt werden kann. Während in Figur 1 diese Außenöffnungen 24 an der der Rückfront 15 des Gerätegehäuses 10 zugewandten Seite des Lautsprechergehäuses 22 angeordnet sind, befinden sich in Figur 2 diese Außenöffnungen 24 an der Fläche des Lautsprechergehäuses 22, die der Bildröhre 22 gegenüberliegt.

Von der Gerätefrontfläche 11 aus sind an den Öffnungen 20, welche - wie Figur 1 besonders hervorhebt - den gleichen Öffnungsquerschnitt wie die Öffnungen 19 aufweisen, die Baßreflexrohre 26 eingesetzt und ins Lautsprechergehäuse 22 geführt. In die Außenöffnungen 24 des Lautsprechergehäuses 22 sind die Baßlautsprecher 25 eingesetzt, wobei in Figur 1 die Schwingspulen 27 außerhalb und in Figur 2 innerhalb des Lautsprechergehäuses 22 liegen. Durch den Einsatz der Baßlautsprecher 25 in den Außenöffnungen 24 wird gewährleistet, daß der vom jeweiligen Baßlautsprecher 25 abgegebene Schalldruck zum Teil durch das Baßreflexrohr 26 frontseitig und zum Teil durch die Kühlöffnungen 16 abgestrahlt wird. Die Lautsprechergehäuse 22 können ebenso wie das Geräteinnere mit nicht dargestellten Materialien zur Klangbeeinflussung ausgestattet sein.

Figur 2, welche einen Schnitt durch ein Gerätegehäuse 10 eines Fernsehgeräts im Bereich der Lautsprechergehäuse 22 zeigt, verdeutlicht, daß die der Bildröhre 23 nebengeordneten Lautsprechergehäuse 22 zum Teil von der Gerätefrontfläche 11 und den Geräteseitenflächen 12 gebildet sind. Der übrige Teil der Lautsprechergehäuse 22 ist als Formteil ausgebildet und an den Kanten K mit der Rückseite 21 der Gerätefrontfläche 11 sowie den Gerätegehäuseseitenflächen 12 verklebt. Die Befestigung des Formteils an der Gerätefrontfläche 11 und den Geräteseitenfläche 12 kann auch in anderer Weise realisiert sein, etwa durch Verschrauben oder Verklammern.

Letztlich bleibt hervorzuheben, daß der Anwendungsbereich der Lautsprecherboxen nicht nur auf die Seitenbereiche 18 der Gerätefrontfläche beschränkt ist. Vielmehr sind auch Anwendungen möglich, bei denen die Lautsprechergehäuse 22 zwischen der Dachfläche 13 und der Bildröhre 23 sowie dem Boden 14 und der Bildröhre 23 angeordnet sind. Bei Mono-Fernsehgeräten kann die Anwendung der erfindungsgemäßen Anordnung auf einen Seitenbereich 18 sowie den Kopf- oder Bodenbereich 28, 29 beschränkt sein.

Werden die Lautsprechergehäuse 22 nicht - wie in den Figuren dargestellt - zumindest teilweise durch das Gerätegehäuse 10 gebildet, lassen sich diese Lautsprechergehäuse 22 sehr schnell als Kompaktbauteil in das Gerätegehäuse 10 einsetzen und verbinden. Nachteilig ist hierbei neben dem höheren Materialaufwand vor allem der Umstand, daß der Zwischenraum zwischen der Bildröhre 23 und der jeweiligen Geräteseitenfläche 12 um die Dicke der zur Geräteseitenfläche hinweisenden Lautsprecherwandung verringert wird.

**Patentansprüche**

1. Fernsehgerät,
   - mit einem Gerätegehäuse (10), welches an der rückwärtigen, dem Bildschirm abgewandten Gehäusefläche eine Vielzahl von Kühlöffnungen (16) aufweist,

   - mit einer Mehrzahl in der Gehäusefrontfläche (11) integrierter Hoch- und Mitteltonlautsprecher bzw. Mittelhochtonlautsprecher, die ihren Schalldruck direkt und im wesentlichen rechtwinklig zur Gerätefrontfläche (11) abstrahlen, und

   - mit einem oder einer Mehrzahl Baßlautsprecher (25), die jeweils in einem an der Rückseite (21) der Gerätefrontfläche (11) liegenden und der Bildröhre (23) nebengeordneten Lautsprechergehäuse (22) angeordnet sind, und die jeweils ihren gesamten Schalldruck indirekt, über Baßreflexrohre (26), die vom Lautsprechergehäuse (22) zur Gerätefrontfläche (11) geführt sind, im wesentlichen rechtwinklig zur Gerätefrontfläche (11) abstrahlen,

   **dadurch gekennzeichnet,**

   daß die Lautsprechergehäuse (22) eine zum Gerätegehäuseinneren hinweisende Außenöffnung (24) aufweisen, in die der jeweilige Baßlautsprecher (25) eingesetzt ist, so daß ein Teil des vom Baßlautsprecher (25) erzeugten Schalldrucks durch ein Baßreflexrohr (26) frontseitig und der andere Teil des Schalldrucks im Geräteinneren durch die Kühlöffnungen (16) abgestrahlt wird und so zum Diffusschallfeld beiträgt.

2. Fernsehgerät nach Anspruch 2,

   **dadurch gekennzeichnet,**

   daß der Öffnungsquerschnitt des Baßreflexrohres (27) in der Gerätefrontfläche (11) </= dem Öffnungsquerschnitt für die Hoch-und Mitteltonlautsprecher bzw. Mittelhochtonlautsprecher ist.

3. Fernsehgerät nach einem der vorherigen Ansprüche,

   **dadurch gekennzeichnet**,

   daß die Außenöffnungen (24) in den Lautsprechergehäusen (22) der Bildröhre (23) oder der Rückwand (15) des Gerätegehäuses (10) zugewandt sind.

4. Fernsehgerät nach einem der vorherigen Ansprüche,

   **dadurch gekennzeichnet**,

   daß das jeweilige Lautsprechergehäuse (22) zumindest teilweise vom Gerätegehäuse (10), insbesondere den Geräteseitenflächen (12) und der Rückseite (21) der Gerätefrontfläche (11) gebildet wird.

Fig.1

Fig.2